# EUROPEAN PATENT SPECIFICATION

(11) **EP 0 594 601 B1**
(45) Date of publication and mention of the grant of the patent: **19.11.1997**
(21) Application number: 91905861.0
(22) Date of filing: 07.03.1991
(51) Int. Cl.: B32B 31/12, B32B 15/06

(54) **METHOD OF MAKING A WEB FOR MANUFACTURING GASKETS**
VERFAHREN ZUR HERSTELLUNG EINES STREIFENS ZUR FERTIGUNG VON DICHTUNGEN
PROCEDE DE PRODUCTION D'UNE BANDE POUR LA FABRICATION DE GARNITURES

(30) Priority: 09.03.1990 SE 9000839
(43) Date of publication of application: 04.05.1994
(73) Proprietor: Trelleborg Rubore Aktiebolag, 391 28 Kalmar (SE)
(72) Inventor: JOSEFSSON, Percy, S-388 00 Ljungbyholm (SE)
(74) Representative: Lundin, Björn-Eric
(86) International application number: SE9100177
(87) International publication number: WO9113758

(56) References cited:
- EP-A- 104 518
- DE-A- 3 419 624
- DE-A- 3 834 993
- SE-B- 413 098

## Description

The present invention relates to a method of making a web for manufacturing gaskets, such as vibration and noise damping spacers for vehicle brakes, said gaskets consisting of a body of sheet metal, of which at least one side is coated with a rubber layer.

In disc brakes for vehicles, friction pads are pressed against a rotating disc by means of hydraulic cylinders. Many of today's disc brakes use vibration and noise damping spacers which are mounted on the friction pads, between these and the cylinders. Usually, the spacers are thin metal sheets coated on both sides with a layer of rubber. Such spacers give no grinding of brakes.

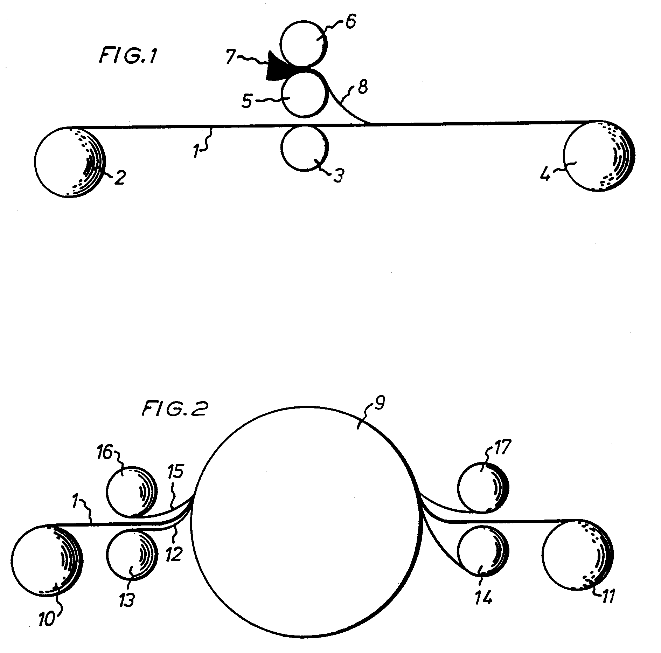

A prior art method of making a web for manufacturing spacers of this type has been used by Trelleborg Industri in Trelleborg and will be described in the following, reference being had to Figs 1 and 2 of the accompanying drawings.

Fig. 1 is a schematic view of a calendering unit, in which a sheet-metal strip 1, provided with a binder on both sides, is coated with rubber. The sheet-metal strip 1 is unwound from a roll 2 and passed over a roller 3 to be wound onto a roll 4 after being coated with a rubber layer on one side. The unit comprises two calendering rollers 5 and 6, which at the entry side are supplied with a rubber composition 7 and at the exit side deliver a rubber sheet 8. If the sheet-metal strip 1 is to be coated with a rubber layer also on its other side, it is once more passed through the unit, but then with the other side facing upwards.

Fig. 2 is a schematic view of a Rotocure machine, comprising a heated drum 9. The sheet-metal strip 1 coated with rubber sheets is unwound from a roll 10 and passed over the drum 9, while being subjected to a light pressure, to be finally wound onto a roll 11. When passed over the drum 9, the sheet-metal strip 1 is surrounded by a lower escort web 12, which is unwound from a roll 13 in front of the drum 9 and wound onto a roll 14 behind the drum, and an upper escort web 15, which is unwound from a roll 16 in front of the drum 9 and wound onto a roll 17 behind the drum.

The sheet-metal strip 1 wound on the roll 11 and coated with a rubber sheet on both sides, forms a web from which vibration and noise damping spacers for vehicle brakes may advantageously be manufactured.

However, this method of making the web suffers from certain disadvantages owing to it being rather difficult to pass the sheet-metal strip 1 through the calendering unit. The sheet-metal strip 1 cannot be passed through the nip between the rollers 5 and 6, but has to be passed over an underlying roller 3, as shown in Fig. 1. Thus, the rubber sheet 8 will slack before joining the sheet-metal strip 1, and may adhere to some extent to one of the rollers 5 and 6. Naturally, such adherence means that the entire surface of the sheet-metal strip will not be coated. Further, the above method requires that the sheet-metal strip be passed twice through the calendering unit in order to be coated on both sides.

The object of the present invention is to provide a method obviating the above-mentioned disadvantages.

According to the invention, this object is achieved by a method which is of the type mentioned in the introduction to this specification and which is characterised in that a carrier, which is in the form of a continuous web and coated on one side with a rubber sheet, is applied to at least one side of a sheet-metal strip provided with a binder, and that the sheet-metal strip then is passed through a Rotocure machine, whereupon the carrier is removed from the sheet-metal strip and the rubber sheet adhering thereto after the curing.

The invention will now be described in more detail below with reference to the accompanying drawings, in which
Figs 1 and 2 schematically illustrate the above prior art method of making a web, Fig. 1 showing a calendering unit and Fig. 2 showing a Rotocure machine, and
Figs 3 and 4 schematically illustrate the inventive method, Fig. 3 showing a calendering unit and Fig. 4 showing a Rotocure machine.

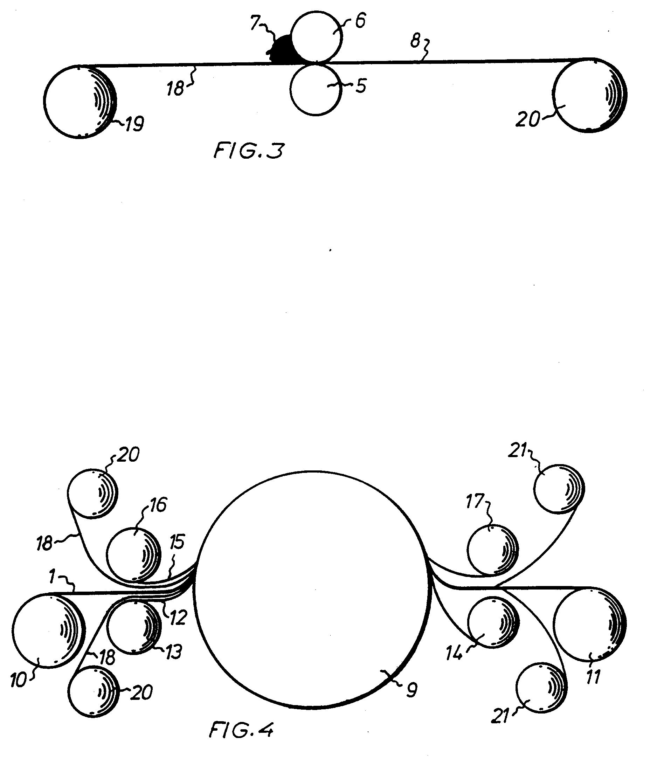

Like parts in Figs 1 and 2, on the one hand, and Figs 3 and 4, on the other hand, have been given like reference numerals.

The inventive method uses a carrier 18, which is in the form of a continuous web wound on a roll 19. The carrier 18 consists of a smooth cloth, e.g. a so-called holland cloth, which is heat-resistant up to at least about 200°C.

One side of the carrier 18 is coated with rubber in a calendering unit comprising two calendering rollers 5 and 6, which at the entry side are supplied with a rubber composition 7, preferably nitrile rubber, and at the exit side deliver a rubber sheet 8. The carrier 18 is unwound from the roll 19, and passed through the nip between the calendering rollers 5 and 6, where its upper side is coated with the rubber sheet 8. The carrier 18 coated with the rubber sheet 8 is then wound onto a roll 20.

A sheet-metal strip 1, which on both sides has been provided with a binder, e.g. based on phenolic resin, is unwound from a roll 10 and passed over the drum 9 of a Rotocure machine, the drum preferably having a temperature of 170-180°C. When on the drum 9, the sheet-metal strip 1 is subjected to a light pressure, and is thereafter wound onto a roll 11.

When passed over the drum 9, the sheet-metal strip 1 is surrounded by a lower and an upper carrier 18, which have been coated with a rubber sheet in the manner described above and which are each unwound from a roll 20 in front of the drum 9. The side of the carriers 18 which is coated with the rubber sheet is applied to the sheet-metal strip 1.

When passed over the drum 9, the sheet-metal strip 1 and the carriers 18 are surrounded by a lower escort web 12, which is unwound from a roll 13 in front of the drum 9 and wound onto a roll 14 behind the drum, and an upper escort web 15, which is unwound from a roll 16 in front of the drum 9 and wound onto a roll 17 behind the drum. Suitably, the escort webs 12 and 15 are reusable webs of polyester or nylon, or reusable fabrics coated with acrylic rubber. In some applications, the webs 12 and 15 may be dispensed with.

When the sheet-metal strip 1 and the carriers 18 applied thereto are passed through the Rotocure machine, the rubber supported by the carriers 18 is bonded to the sheet-metal strip 1 by the binder on the two sides of the sheet-metal strip, and is at the same time cured. Thus, the hardness of the rubber can be adjusted by controlling the speed at which the sheet-metal strip 1 and the carriers 18 are passed through the Rotocure machine.

After passing the drum 9, each carrier 18 is stripped off the rubber sheet now bonded to the sheet-metal strip 1, and is wound on a roll 21.

The sheet-metal strip 1 wound on the roll 11 and coated on both sides with rubber is a suitable starting material for manufacturing gaskets, e.g. spacers of the type mentioned in the introduction.

## Claims

1. A method of making a web for manufacturing gaskets, such as vibration and noise damping spacers for vehicle brakes, said gaskets consisting of a body of sheet metal, of which at least one side is coated with a rubber layer, **characterised** in that a carrier (18), which is in the form of a continuous web and coated on one side with a rubber sheet, is applied to at least one side of a sheet-metal strip (1) provided with a binder, and that the sheet-metal strip (1) then is passed through a Rotocure machine (9), whereupon the carrier (18) is removed from the sheet-metal strip (1) and the rubber sheet adhering thereto after the curing.

2. A method as claimed in claim 1, **characterised** in that the carrier (18) is a so-called holland cloth.

## Patentansprüche

1. Verfahren zur Herstellung eines Bandes zur Fertigung von Dichtungen, wie schwingungs- und schalldämpfenden Abstandshaltern für Fahrzeugbremsen, wobei diese Dichtungen aus einem Metallblechkörper bestehen, von welchem wenigstens eine Seite mit einer Kautschukschicht überzogen ist, **dadurch gekennzeichnet**, daß ein Träger (18), der die Form eines kontinuierlichen Bandes hat und auf einer Seite mit einem Kautschukbogen überzogen ist, auf wenigstens einer Seite eines mit einem Bindemittel versehenen Metallblechstreifens (1) aufgebracht wird und der Metallblechstreifen (1) dann durch eine Rotocure-Maschine (9) geführt wird, worauf der Träger (18) von dem Metallblechstreifen (1) und dem nach der Härtung daran anhaftenden Kautschukbogen entfernt wird.

2. Verfahren nach Anspruch 1, **dadurch gekennzeichnet**, daß der Träger (18) ein sogenannter Hollandstoff ist

## Revendications

1. Procédé de production d'une bande destinée à la fabrication de garnitures, telles que des éléments d'espacement amortissant les vibrations et les bruits pour des freins de véhicule, ces garnitures étant constituées d'un corps de métal en feuille dont au moins une face est revêtue d'une couche de caoutchouc, caractérisé en ce qu'un support (18), qui est sous la forme d'une bande continue et est revêtu sur une face d'une feuille de caoutchouc, est appliqué sur au moins une face d'un ruban de métal (1) pourvue d'un liant, et en ce que le ruban de métal (1) est alors passé à travers une machine Rotocure (9), après quoi le support (18) est séparé du ruban de métal (1) et de la feuille de caoutchouc adhérant à lui après la vulcanisation.

2. Procédé suivant la revendication 1, caractérisé en ce que le support (18) est ce que l'on appelle une toile écrue.
